Europäisches Patentamt

European Patent Office

Office européen des brevets

(11) Veröffentlichungsnummer : **0 016 996 B1**

(12) **EUROPÄISCHE PATENTSCHRIFT**

(45) Veröffentlichungstag der Patentschrift :
21.07.82

(51) Int. Cl.³ : **C 01 B 25/235**, B 01 J 23/54

(21) Anmeldenummer : 80101135.4

(22) Anmeldetag : 06.03.80

(54) Verfahren zur Entfernung von Verunreinigungen organischer Art aus Phosphorsäure.

(30) Priorität : 19.03.79 DE 2910711

(43) Veröffentlichungstag der Anmeldung :
15.10.80 (Patentblatt 80/21)

(45) Bekanntmachung des Hinweises auf die Patenterteilung : 21.07.82 Patentblatt 82/29

(84) Benannte Vertragsstaaten :
AT BE CH DE FR GB IT NL SE

(56) Entgegenhaltungen :
DE - A - 2 522 220
DE - A - 2 813 755
DE - C - 593 370
DE - C - 884 358
GB - A - 1 504 480

(73) Patentinhaber : HOECHST AKTIENGESELLSCHAFT
Postfach 80 03 20
D-6230 Frankfurt/Main 80 (DE)

(72) Erfinder : Maurer, Alexander, Dr.
Am Grünen Weg 7
D-5030 Hürth (DE)
Erfinder : Schrödter, Klaus, Dr.
Röntgenstrasse 23
D-5000 Köln 30 (DE)
Erfinder : Heymer, Gero, Dr.
Fasanenaue 12
D-5042 Erftstadt (DE)

## Verfahren zur Entfernung von Verunreinigungen organischer Art aus Phosphorsäure

Die vorliegende Erfindung betrifft ein Verfahren zur Entfernung von Verunreinigungen organischer Art aus wäßrigen Lösungen von Phosphorsäure, insbesondere von Naßverfahrensphosphorsäure, durch Zugabe von Wasserstoffperoxid zu diesen Lösungen. Naßverfahrensphosphorsäure wird durch naßchemischen Aufschluß von Rohphosphaten mit Mineralsäuren, im allgemeinen Schwefelsäure, gewonnen. Die gebildete Rohsäure enthält neben anorganischen Verunreinigungen auch organische Bestandteile, die aus dem Phosphatmineral stammen und je nach Herkunft und Vorbehandlung des Rohphosphates in unterschiedlicher Konzentration vorliegen. Zur Entfernung dieser organischen Verunreinigungen aus roher Naßphosphorsäure sind verschiedene Methoden üblich, wie Adsorption durch Aktivkohle, Extraktion mit organischen Lösungsmitteln sowie Abtrennung nach Ausflockung oder durch oxidativen Abbau. Jedoch ist der Restgehalt an organischen Substanzen nach einer derartigen Behandlung für verschiedene Anwendungsbereiche (Ernährung, Medizin, spezielle Phosphate) noch so hoch, daß solche « vorgereinigte » Säuren (green acids) ein weiteres Mal, nach oder bei der anschließenden Entfernung der anorganischen Verunreinigungen, behandelt werden müssen.

So wird beispielsweise nach der DE-C-884 358 eine durch Extraktionsreinigung gewonnene Phosphorsäure anschließend mit Aktivkohle oder Oxidationsmitteln wie $H_2O_2$, Ozon oder Sauerstoff behandelt. Durch die oxidierenden Maßnahmen erreicht man jedoch meist nur eine Aufhellung der Säure, ohne daß wesentliche Mengen organischer Verunreinigungen daraus entfernt werden ; der Grund liegt in der bekannten Tatsache, daß derartige Oxidationsmittel meist selektiv oder doch zumindest bevorzugt chromophore Gruppen angreifen. Bei der Aktivkohle-Behandlung liegt der große Nachteil darin, daß, bedingt durch sich einstellende Adsorptions- /Desorptionsgleichgewichte, für die Entfernung relativ geringer Mengen organischer Verunreinigungen unverhältnismäßig viel Aktivkohle benötigt wird.

In der DE-A-2 522 220 wird daher eine Reinigung der Phosphorsäure von organischen Verunreinigungen durch den Zusatz von Alkalichlorat, vorzugsweise in Mischung mit Alkalichlorit oder Alkalinitrat, empfohlen. Durch diese Maßnahme war es zwar möglich, den Weißgrad eines aus so gereinigter Phosphorsäure hergestellten Tripolyphosphats zu verbessern, man mußte allerdings den gravierenden Nachteil hinnehmen, daß das Produkt anschließend noch unzersetztes Oxidationsmittel enthielt. Dies erfordert weitere Reinigungsschritte, wenn höhere Anforderungen an die Reinheit des Produktes gestellt werden.

Aus der GB-A-1 504 480 ist schließlich ein weiteres Verfahren zur Reinigung der Naßverfahrensphosphorsäure von organischen Verunreinigungen bekannt, das eine Behandlung dieser Säure mittels Chlorat in Anwesenheit von geringen Mengen Salzsäure bei erhöhter Temperatur vorsieht. Hier treten jedoch die gleichen, bereits erwähnten Schwierigkeiten auf. Man nimmt zwangsläufig eine Verunreinigung der Phosphorsäure mit fremden Ionen in Kauf, was in den meisten Fällen einen weiteren Reinigungsschritt erforderlich macht.

Demgegenüber wurde nun ein Verfahren zur Reinigung von Phosphorsäure von Verunreinigungen organischer Art gefunden, das einerseits deutlich herabgesetzte Gehalte an organisch gebundenem Kohlenstoff in der Säure bewirkt, andererseits aber die Nachteile der bekannten Arbeitsweisen vermeidet.

Das erfindungsgemäße Verfahren besteht darin, daß man die zu reinigenden wäßrigen Lösungen der Phosphorsäure mit Wasserstoffperoxid in Gegenwart eines Katalysators versetzt und reagieren läßt, wobei der Katalysator aus einem Edelmetall oder einem gegenüber Phosphorsäure inerten Metalloxid oder einem Gemisch von diesem Edelmetall und Metalloxid besteht.

Als Edelmetalle werden im Rahmen der vorliegenden Erfindung Gold, Silber und insbesondere Platin und Palladium verstanden.

Die Edelmetalle können dabei in einer für solche Katalysatoren üblichen Form, z.B. als Platinnetz, oder aufgezogen auf einen Träger, der z.B. aus einem Silikat besteht, eingesetzt werden.

Als Metalloxide sind vorzugsweise Mischoxide geeignet, die aus Aluminiumoxid einerseits sowie einem Oxid des Mangans oder Cers oder Eisens oder Kupfers andererseits bestehen.

Insbesondere geeignet sind oxidische Katalysatoren, die aus einem Mischoxid von Manganoxid und Aluminiumoxid bestehen und die 0,1 bis 1,0 mol Mangan pro kg $Al_2O_3$ enthalten.

Es hat sich als vorteilhaft erwiesen, den Katalysator in einer Menge von mindestens 0,01 g, vorzugsweise von 0,1 bis 1,0 g, pro Gramm $H_2O_2$ und das Wasserstoffperoxid in einer Menge von 0,1 bis 3,0 Gew%, bezogen auf das $P_2O_5$, der Phosphorsäure einzusetzen.

Das Wasserstoffperoxid verwendet man am besten in Form einer wäßrigen Lösung mit einem Gehalt an $H_2O_2$ von 3-70 Gewichts%, beispielsweise in handelsüblicher Form von etwa 35 Gew%.

Zweckmäßigerweise führt man die Reaktion des $H_2O_2$ bei einer Temperatur zwischen 10 und 150 °C durch, wobei die höheren Temperaturen dieses Bereiches bevorzugt sind. Wichtig ist, daß das als Katalysator oder deren Träger verwendete Material von Phosphorsäure nicht angegriffen wird, was ja zu einer Verunreinigung der Säure führen würde.

Der Katalysator kann in den Reaktor eingebracht werden, in welchem das Wasserstoffperoxid der Säure zugesetzt wird. Er kann aber auch in eine Umpumpleitung eingebaut werden, durch

welche die mit H$_2$O$_2$ versetzte Säure fließt. Auf diese Weise lassen sich nicht nur sehr verdünnte Phosphorsäurelösungen, sondern vor allem auch konzentrierte Phosphorsäuren mit einem P$_2$O$_5$-Gehalt bis zu 70 Gew% reinigen.

Obwohl es an sich bekannt ist, daß Metalle, wie z.B. Platin oder Stoffe wie MnO$_2$, die Zersetzung von H$_2$O$_2$ katalysieren, war die Wirkung der erfindungsgemäßen Maßnahmen nicht vorhersehbar, da zum einen bekannt ist, daß gerade Phosphorsäure als Stabilisierungsmittel eingesetzt wird, um die katalytische Zersetzung von H$_2$O$_2$ zu verhindern und zum anderen nicht zu erwarten war, daß durch den schnelleren Zerfall des H$_2$O$_2$ auch eine gezielte Oxidation organisch gebundenen Kohlenstoffs und nicht nur eine oxidative Zerstörung chromophoren Gruppen erreicht werden könnte, verbunden mit einer besseren Ausnutzung des eingesetzten H$_2$O$_2$.

Grundsätzlich können durch das erfindungsgemäße Verfahren alle Phosphorsäuren von organischen Verunreinigungen gereinigt werden. Vorteilhafterweise unterwirft man jedoch vorgereinigte, von den ionischen Verunreinigungen bereits befreite Phosphorsäure dieser Reinigung ; so geht kein Wasserstoffperoxid durch unnötige Redoxreaktionen mit entsprechenden Kationen oder Anionen verloren. In besonderem Maße eignet sich das Verfahren zur Reinigung von nach einem Extraktionsverfahren hergestellter Phosphorsäure. Hier sind die ionischen Verunreinigungen weitgehend beseitigt und das Wasserstoffperoxid, aktiviert durch den Katalysator, ist in der Lage, selbst noch vorhandene Lösungsmittelreste zu entfernen.

Beispiel 1

Unter gutem Rühren werden 400 g Phosphorsäure, die nach einem Extraktionsverfahren gereinigt wurde, und 60 % P$_2$O$_5$ sowie 440 ppm organischen Kohlenstoff enthält, mit 6 g einer handelsüblichen 35 %igen Wasserstoffperoxidlösung versetzt. Im Reaktionsgefäß abgetaucht befindet sich zum Zeitpunkt der H$_2$O$_2$-Zugabe und während der Reaktionszeit von einer Stunde ein Platinnetz (Gewicht : 0,5 g). Die Temperatur während der Reaktion beträgt 80 °C. Man erhält eine Phosphorsäure, deren Gehalt an organischem Kohlenstoff nunmehr 160 ppm beträgt.

Beispiel 2

Man verfährt wie in Beispiel 1. Es wird lediglich die Temperatur während der Reaktion auf 110 °C erhöht. Nach der Reaktion enthält die Phosphorsäure nur noch 140 ppm organischen Kohlenstoff.

Beispiel 3 (Vergleichsbeispiel)

In Abänderung von Beispiel 1 wird die Phosphorsäure mit der gleichen Menge an H$_2$O$_2$ jedoch in Abwesenheit des Katalysators umgesetzt. Nach Beendigung der Reaktion hat die Phosphorsäure noch einen Gehalt von 290 ppm organischen Kohlenstoff.

Beispiel 4

400 g Phosphorsäure, die nach einem Extraktionsverfahren gereinigt wurde und 60 % P$_2$O$_5$ sowie 330 ppm organischen Kohlenstoff enthält, werden unter gutem Rühren mit 6 g einer handelsüblichen 35 %igen Wasserstoffperoxidlösung versetzt. Im Reaktionsgefäß abgetaucht befindet sich zum Zeitpunkt der H$_2$O$_2$-Zugabe und während der Reaktionszeit von einer Stunde 1 g eines inerten Katalysators, der aus einem Mischoxid von Manganoxid und Aluminiumoxid besteht, mit einem Gehalt an Mangan von 38 g Mn/kg Al$_2$O$_3$. Die Temperatur während der Reaktion beträgt 80 °C. Es resultiert eine Phosphorsäure, deren Gehalt an organischem Kohlenstoff nunmehr 110 ppm beträgt.

Beispiel 5

400 g einer vorgereinigten sog. « grünen » Phosphorsäure mit einem P$_2$O$_5$-Gehalt von 48 % und einem Gehalt an organischem Kohlenstoff von 380 ppm werden in einem Rührgefäß, in dem sich der Katalysator von Beispiel 4 befindet, auf 80 °C erhitzt. Die Katalysator-Menge ist die gleiche wie in Beispiel 4. Danach werden 6 g einer 35 %igen Wasserstoffperoxidlösung zugegeben und das Reaktionsgemisch eine Stunde bei dieser Temperatur gerührt. Die resultierende Phosphorsäure enthält noch 190 ppm organischen Kohlenstoff.

**Ansprüche**

1. Verfahren zur Entfernung von Verunreinigungen organischer Art aus wäßrigen Lösungen von Phosphorsäure durch Zugabe von Wasserstoffperoxid zu diesen Lösungen, dadurch gekennzeichnet, daß man die Lösungen in Gegenwart eines Katalysators mit Wasserstoffperoxid versetzt und reagieren läßt, wobei der Katalysator aus einem Edelmetall oder einem gegenüber Phosphorsäure inerten Metalloxid oder aus einem Gemisch von diesem Edelmetall und dem Metalloxid besteht.

2. Verfahren nach Anspruch 1, dadurch gekennzeichnet, daß man einen Katalysator einsetzt, bei dem das Edelmetall auf einen Träger, der aus einem Silikat besteht, aufgebracht ist.

3. Verfahren nach Anspruch 1 oder 2, dadurch gekennzeichnet, daß man als Edelmetall Platin oder Palladium einsetzt.

4. Verfahren nach Anspruch 1, dadurch gekennzeichnet, daß man als Metalloxid ein Mischoxid einsetzt, das aus Al$_2$O$_3$ einerseits sowie Oxiden des Mangans oder Cers oder Eisens oder Kupfers andererseits, besteht.

5. Verfahren nach Anspruch 4, dadurch gekennzeichnet, daß man einen Manganoxid-Aluminiumoxid-Katalysator einsetzt, der 0,1 bis 1 mol

Mangan pro kg $Al_2O_3$ enthält.

6. Verfahren nach einem der Ansprüche 1 bis 5, dadurch gekennzeichnet, daß man den Katalysator in einer Menge von mindestens 0,01 g/g $H_2O_2$ einsetzt.

7. Verfahren nach Anspruch 6, dadurch gekennzeichnet, daß man den Katalysator in einer Menge von 0,1 bis 1,0 g/g $H_2O_2$ einsetzt.

8. Ferfahren nach einem der Ansprüche 1 bis 7, dadurch gekennzeichnet, daß man das Wasserstoffperoxid in einer Menge von 0,1 bis 3 Gew% $H_2O_2$, bezogen auf $P_2O_5$, einsetzt.

9. Verfahren nach einem der Ansprüche 1 bis 8, dadurch gekennzeichnet, daß man das Wasserstoffperoxid in Form einer Lösung mit einem Gehalt an $H_2O_2$ von 3-70 Gew% einsetzt.

10. Verfahren nach einem der Ansprüche 1 bis 9, dadurch gekennzeichnet, daß man die Reaktion des $H_2O_2$ bei einer Temperatur zwischen 10 und 150 °C durchführt.

## Claims

1. Process for freeing aqueous phosphoric acid solutions from organic contaminants by admixing the solutions with hydrogen peroxide, which comprises : admixing and reacting the solutions with hydrogen peroxide in the presence of a catalyst consisting of a noble metal or metal oxide being inert with respect to phosphoric acid or of a mixture of said noble metal and metal oxide.

2. Process as claimed in claim 1, wherein a catalyst is used of which the noble metal is applied on to a carrier consisting of a silicate.

3. Process as claimed in claim 1 or 2, wherein the noble metal is platinum or palladium.

4. Process as claimed in claim 1, wherein the metal oxide is a mixed oxide consisting of $Al_2O_3$ on the one hand and of oxides of manganese or cerium or iron or copper on the other hand.

5. Process as claimed in claim 4, wherein a manganese oxide/aluminium oxide-catalyst containing 0.1 to 1 mol of manganese per kg of $Al_2O_3$ is used.

6. Process as claimed in any of claims 1 to 5, wherein the catalyst is used in a proportion of a least 0.01 g per g of $H_2O_2$.

7. Process as claimed in claim 6, wherein the catalyst is used in a proportion of 0.1 to 1.0 g per g of $H_2O_2$.

8. Process as claimed in any of claims 1 to 7, wherein the hydrogen peroxide is used in a proportion of 0.1 to 3 weight % of $H_2O_2$, based on $P_2O_5$.

9. Process as claimed in any of claims 1 to 8, wherein the hydrogen peroxide is used in the form of a solution containing 3 to 70 weight % of $H_2O_2$.

10. Process as claimed in any of claims 1 to 9, wherein the reaction with $H_2O_2$ is effected at a temperature within the range 10 to 150 °C.

## Revendications

1. Procédé pour l'élimination d'impuretés organiques de solutions aqueuses d'acide phosphorique par addition de peroxyde d'hydrogène à ces solutions, caractérisé en ce que l'on ajoute aux solutions du peroxyde d'hydrogène en présence d'un catalyseur et on fait réagir, le catalyseur consistant en un métal noble ou en un oxyde métallique inerte vis-à-vis de l'acide phosphorique ou en un mélange de ce métal noble et de l'oxyde métallique.

2. Procédé selon la revendication 1, caractérisé en ce que l'on utilise un catalyseur dans lequel le métal noble est déposé sur un support consistant en un silicate.

3. Procédé selon la revendication 1 ou 2, caractérisé en ce que l'on utilise comme métal noble le platine ou le palladium.

4. Procédé selon la revendication 1, caractérisé en ce que l'on utilise comme oxyde métallique un oxyde mixte qui consiste d'une part en $Al_2O_3$, d'autre part en oxydes de manganèse ou de cérium ou de fer ou de cuivre.

5. Procédé selon la revendication 4, caractérisé en ce que l'on utilise un catalyseur oxyde de manganèse-oxyde d'aluminium qui contient 0,1 à 1 mole de manganèse par kg de $Al_2O_3$.

6. Procédé selon l'une des revendications 1 à 5, caractérisé en ce que l'on utilise le catalyseur en quantité d'au moins 0,01 g par g de $H_2O_2$.

7. Procédé selon la revendication 6, caractérisé en ce que l'on utilise le catalyseur en quantité de 0,1 à 1,0 g par g de $H_2O_2$.

8. Procédé selon l'une des revendications 1 à 7, caractérisé en ce que l'on utilise le peroxyde d'hydrogène en quantité de 0,1 à 3 % en poids de $H_2O_2$, par rapport au $P_2O_5$.

9. Procédé selon l'une des revendications 1 à 8, caractérisé en ce que l'on utilise le peroxyde d'hydrogène sous forme d'une solution contenant 3 à 70 % en poids de $H_2O_2$.

10. Procédé selon l'une des revendications 1 à 9, caractérisé en ce que l'on effectue la réaction de $H_2O_2$ à une température comprise entre 10 et 150 °C.